# EUROPÄISCHE PATENTSCHRIFT

(11) **EP 3 785 592 B1**
(45) Veröffentlichungstag und Bekanntmachung des Hinweises auf die Patenterteilung: **18.05.2022**
(21) Anmeldenummer: 20189394.8
(22) Anmeldetag: 04.08.2020
(51) Int. Cl.: A47L 9/26, A47L 5/36

(54) **KABELGEBUNDENES REINIGUNGSGERÄT**
WIRED CLEANING DEVICE
APPAREIL DE NETTOYAGE FILAIRE

(30) Priorität: 30.08.2019 DE 202019104772 U
(43) Veröffentlichungstag der Anmeldung: 03.03.2021
(73) Patentinhaber: Sprintus GmbH, 73642 Welzheim-Breitenfürst (DE)
(72) Erfinder: Hofmann, Johannes, 73663 Berglen (DE); Holger, Lepold, 73635 Rudersberg (DE)
(74) Vertreter: Glawe, Delfs, Moll

(56) Entgegenhaltungen:
- EP-A2- 2 594 180
- DE-A1- 3 448 046
- US-A- 2 594 456
- US-A- 2 725 588

## Beschreibung

Gegenstand der vorliegenden Erfindung ist ein kabelgebundenes Reinigungsgerät, insbesondere ein Sauggerät.

Kabelgebundene Reinigungsgeräte, wie bspw. Staubsauger, müssen im Rahmen einer Reinigung häufig an unterschiedlichen Reinigungsstellen verwendet werden. Dies macht es erforderlich das Reinigungsgerät zu transportieren und ggf. an einer anderen Steckdose anzuschließen. Für derart kurze Transportwege ist es unpraktisch, das Kabel vom Reinigungsgerät zu entfernen oder vollständig über eine am Reinigungsgerät angeordnete Aufrolleinrichtung aufzuwickeln und zu verstauen.

Das Dokument US 2,725,588 beschreibt ein kabelgebundenes Sauggerät nach dem Oberbegriff des unabhängigen Anspruchs 1.

Für kurze Transportwege, bspw. ins nächstgelegene Stockwerk oder Nachbarzimmer, weisen einige Staubsauger zu diesem Zweck einen Kabelhaken auf. Über den Kabelhaken kann ein lose aufgewickeltes Kabel gehängt werden, damit dieses nicht in der Hand getragen werden muss. Beim anschließenden Transport des Staubsaugers kommt es jedoch häufig zu einem ungewollten Lösen bzw. Herunterrutschen von Teilen des Kabels oder zu einem Verhängen des freiliegenden und mit einem Stecker versehenen Kabelendes. Ein gelöstes Kabel führt während des Transports zu einem ungewollten Verhängen des Kabels, wodurch ggf. eine starke Zugkraft auf das Kabel ausgeübt wird. Außerdem kann ein loses Kabel beispielsweise in einer Fahrstuhltür eingeklemmt werden, was dann zu Ausfällen des Reinigungsgeräts führt und Reparaturen erforderlich macht.

Um das Problem eines herumschlagenden Kabelendes oder eines sich verhängenden Kabelendes zu minimieren, ist es bekannt, das Kabel über eine integrierte automatische oder manuelle Aufrolleinrichtung aufzurollen. Dies dauert jedoch in Anbetracht der Kabellänge von mehreren Metern und des kurzen Transportwegs des Reinigungsgeräts häufig zu lange. Zudem muss das Kabel anschließend an einer neuen Reinigungsstelle zur ordnungsgemäßen Verwendung wieder vollständig abgewickelt werden, um Überhitzung und Kabelbrand vorzubeugen.

Der Erfindung liegt die Aufgabe zugrunde, ein kabelgebundenes Reinigungsgerät vorzustellen, bei dem die aus dem Stand der Technik bekannten Nachteile vermieden oder zumindest reduziert werden.

Gelöst wird diese Aufgabe durch ein kabelgebundenes Reinigungsgerät gemäß dem Schutzanspruch 1. Vorteilhafte Weiterbildungen sind Gegenstand der abhängigen Schutzansprüche.

Demnach betrifft die Erfindung ein kabelgebundenes Reinigungsgerät, insbesondere ein Sauggerät, mit einer über ein Bedienelement betätigbaren Aufrolleinrichtung für ein Kabel und einem an einer Außenseite des Reinigungsgeräts angeordneten Kabelhaken, wobei das Bedienelement in einer Verriegelungsstellung einen Verschluss für den Kabelhaken bildet.

Bei einem kabelgebundenen Reinigungsgerät kann es sich um ein Sauggerät, wie bspw. einen Trockensauger, handeln.

Als Aufrolleinrichtung wird eine Einrichtung zum Aufrollen oder Aufspulen eines Kabels bezeichnet. Bei dem Kabel kann es sich um ein elektrisches Kabel bzw. Stromkabel handeln. Die Aufrolleinrichtung umfasst in der Regel eine Aufrolltrommel zur Aufnahme des Kabels, die drehbar um eine Drehachse gelagert ist und ggf. zusätzlich ein Bedienelement bzw. Betätigungselement, wie bspw. eine Handkurbel. Eine Kurbelbewegung des Bedienelements initiiert die Aufrollung des Kabels. Ein freiliegendes Ende des Kabels, welches mit einem Stecker versehen sein kann, kann somit über die Aufrolleinrichtung aufgerollt werden und im oder am Reinigungsgerät verstaut werden.

Unter einem Kabelhaken ist jede Einrichtung zu verstehen, an der ein Kabel aufgehängt werden kann bzw. die geeignet ist eine oder mehrere Kabelwicklungen aufzunehmen. Der Kabelhaken kann bspw. in Form einer Nut oder eines Vorsprungs am Reinigungsgerät vorgesehen sein. Der Kabelhaken kann einteilig mit dem Gehäuse ausgebildet sein oder nachgerüstet werden. Zweckmäßig ist der Kabelhaken an einer Außenseite eines Gehäuses des Reinigungsgeräts angeordnet. Der Kabelhaken bietet zusätzlichen Stauraum am Staubsauger für ein Kabel während des Transports des Reinigungsgeräts oder für ein Verlängerungs- oder Ersatzkabel. Ein Kabelhaken bietet die Möglichkeit ein Kabel schnell und einfach zu verstauen und zu entnehmen.

Über das Bedienelement erfolgt die Bedienung der Aufrolltrommel. Als Bedienelement werden auch solche am Bedienelement angeordneten Teile (bspw. eine Lasche, ein Stift oder ein sonstiges beweglich gelagertes Element) bezeichnet, die für die Bedienung der Aufrolltrommel durch einen Bediener keine oder nur eine untergeordnete Rolle spielen. In der Verriegelungsstellung bildet das Bedienelement einen Verschluss für den Kabelhaken. Bei dem verschlossenen Kabelhaken ist ein Abstand zwischen dem Kabelhaken und dem Bedienelement kleiner als ein Durchmesser des Kabels. In der Verriegelungsstellung des Bedienelements kann folglich ein auf dem Kabelhaken aufgehängtes Kabel nicht entnommen werden bzw. vom Kabelhaken abrutschen oder ein Kabel am Kabelhaken aufgehängt werden. In anderen Worten ist der Kabelhaken durch das Bedienelement verschlossen bzw. verriegelt und verhindert bspw. während des Transports des Reinigungsgeräts ein ungewolltes Abrutschen oder Lösen des Kabels vom Kabelhaken. Kabeldurchmesser können variieren und betragen in der Regel zwischen 5 mm und 8 mm.

Der Erfindung liegt der Gedanke zugrunde, eine Verriegelung für den Kabelhaken zu schaffen, die durch ein ohnehin vorhandenes Bedienelement der Aufrolleinrichtung auf einfache und schnelle Weise von einem Verwender des Staubsaugers eingerichtet werden kann, ohne dass die Funktionsweise der Aufrolleinrichtung beeinträchtigt wird. Das ohnehin vorhandene Bedienelement (wie bspw. eine Handkurbel) ist somit erfindungsgemäß derart ausgestaltet, dass es in eine Verriegelungsstellung bringbar ist, in der es eine verschlussbildende Wirkverbindung mit dem Kabelhaken eingeht. Durch Positionierung des Bedienelements in der Verriegelungsstellung bildet dieses einen Verschluss für den Kabelhaken. Von dem "verschlossenen" Kabelhaken kann ein aufgehängtes Kabel nicht abrutschen. Durch die einfache und zuverlässige Verstaumöglichkeit kann insbesondere bei einem Transport des Reinigungsgeräts Zeit eingespart werden.

Das Bedienelement kann zwischen der Verriegelungsstellung und einer Freigabestellung überführbar sein, wobei in der Freigabestellung der Kabelhaken frei zugänglich ist. In der Freigabestellung ist der Kabelhaken nicht verschlossen und ein Kabel kann am Kabelhaken aufgehängt oder von diesem entnommen werden. Der Verschluss des Kabelhakens kann so manuell über einen Verwender des Reinigungsgeräts gesteuert werden.

In einer möglichen Ausführungsform führt das Bedienelement zwischen der Verriegelungsstellung und der Freigabestellung eine Schwenkbewegung aus, vorzugsweise eine Schwenkbewegung entlang einer Kreisbahn. Die Schwenkbewegung entlang der Kreisbahn entspricht einer Kurbelbewegung des Bedienelements zur Aufwicklung des Kabels über die Aufrolleinrichtung. Die Überführung des Bedienelements ist reversibel.

Die Aufrolleinrichtung des Reinigungsgeräts kann eine um eine Drehachse drehbar gelagerte Aufrolltrommel zur Aufnahme des Kabels aufweisen, wobei das Bedienelement mit der Aufrolltrommel verbunden ist. Die Drehachse verläuft im Zentrum der Kreisbahn, entlang der das Bedienelement verschwenkbar ist. Vorzugsweise roll die Aufrolleinrichtung bei einer Bewegung des Bedienelements entlang der Kreisbahn in einer ersten Richtung ein Kabel auf, und bei einer Bewegung in eine entgegengesetzte Richtung gibt die Aufrolleinrichtung das Kabel frei.

Das Bedienelement kann einen sich im Wesentlichen in einer radialen Richtung erstreckenden ersten Abschnitt aufweisen. Der erste Abschnitt des Bedienelements dient als Hebel, um beim Aufrollen des Kabels ausreichend Kraft auf die Aufrolltrommel der Aufrolleinrichtung übertragen zu können. Zusätzlich kann der erste Abschnitt in der Verriegelungsstellung des Bedienelements zumindest teilweise zur Bildung des Verschlusses für den Kabelhaken dienen.

Das Bedienelement kann des Weiteren einen drehbar auf dem ersten Abschnitt angeordneten zweiten Abschnitt aufweisen, der bspw. als Griffelement ausgebildet ist. Der zweite Abschnitt sollte gut zugänglich angeordnet sein, da ein Verwender unmittelbar auf den zweiten Abschnitt einwirkt. In einer vorteilhaften Ausführungsform des Reinigungsgeräts ist dessen Bedienelement als Handkurbel ausgebildet. Durch die drehbare Lagerung des zweiten Abschnitts gegenüber dem ersten Abschnitt dreht sich dieser bei einer Kurbelbewegung nicht mit.

Das Reinigungsgerät weist vorzugsweise einen feststehenden Kabelhaken auf. Feststehende Kabelhaken sind robuster im Vergleich zu bspw. ausklappbaren oder sonst beweglichen Kabelhaken. Der Kabelhaken kann einteilig mit dem Gehäuse des Reinigungsgeräts ausgebildet sein. Der Kabelhaken kann so auch höheren Zugspannungen Stand halten, die auf das aufgehängte Kabel wirken.

Der Kabelhaken erstreckt sich bspw. im Wesentlichen in einer vertikalen Richtung. In der einfachsten Ausführungsform erstreckt sich der Kabelhaken ausgehend von einer Oberseite des Gehäuses des Reinigungsgeräts in Aufstellrichtung des Reinigungsgeräts nach oben.

In der Verriegelungsstellung kann das Bedienelement den Kabelhaken mindestens teilweise, vorzugsweise vollständig, überdecken.

In der Verriegelungsstellung kann das Bedienelement einen Abstand zu dem Kabelhaken aufweisen, vorzugsweise ist der Abstand geringer als ein Durchmesser des Kabels. Durch den Abstand zwischen Bedienelement und Kabelhaken ist gewährleistet, dass die Aufrolleinrichtung reibungslos funktionieren kann. Bei einer Kreisbewegung des Bedienhebels über den Kabelhaken hinweg kommt es somit nicht zu Beeinträchtigungen, bspw. durch Reibung.

Das Bedienelement kann in der Verriegelungsstellung arretierbar ausgebildet sein. Eine zusätzliche Arretierung verhindert ein ungewolltes Verschwenken des Bedienhebels aus der Verriegelungsposition, bspw. beim Transport des Reinigungsgeräts.

Die Erfindung wird nachfolgend anhand einer vorteilhaften Ausführungsform und unter Bezugnahme auf die beigefügten Zeichnungen beispielhaft beschrieben. Es zeigen:
- Fig. 1:: eine dreidimensionale Darstellung eines erfindungsgemäßen kabelgebundenen Reinigungsgeräts in Form eines Trockensaugers mit einem Bedienelement in einer Verriegelungsstellung;
- Fig. 2:: eine dreidimensionale Darstellung eines erfindungsgemäßen kabelgebundenen Reinigungsgeräts in Form eines Trockensaugers mit dem Bedienelement in einer Freigabestellung;
- Fig. 3:: den Trockensauger gemäß Fig. 1 aus der Vogelperspektive (a), in einer Schnittansicht (b) und in einer Vergrößerung (c);
- Fig. 4:: den Trockensauger gemäß Fig. 2 aus der Vogelperspektive (a) und in einer Vergrößerung (b); und
- Fig. 5:: den Trockensauger gemäß Fig. 2 in Rückansicht (a) und in einer Vergrößerung (b).

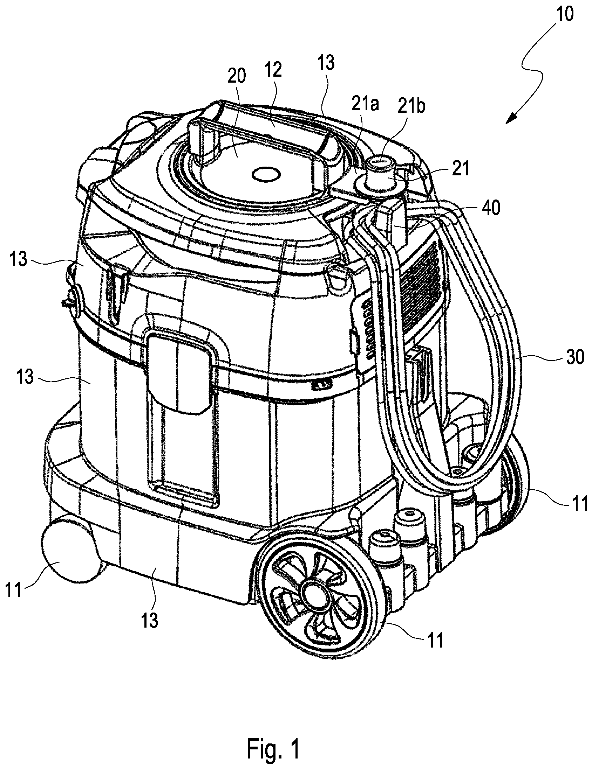

In der Fig. 1 ist ein kabelgebundenes Reinigungsgerät 10 in Form eines Trockensaugers zur (professionellen) Gebäudereinigung bspw. für den Einsatz in Hotels oder Büros gezeigt. Das erfindungsgemäße kabelgebundene Reinigungsgerät 10 ist jedoch nicht auf Trockensauger der dargestellten Art beschränkt, sondern umfasst z.B. Sauggeräte jeder Art für einen professionellen und/oder privaten Einsatz, mithin auch Nasssauger.

Das Reinigungsgerät 10 umfasst ein mobiles Gehäuse 13, das auf Rollen 11 gelagert ist (bspw. Bodenstaubsauger). In dem Gehäuse 13 ist ein Motor für ein Gebläse zur Erzeugung eines Unterdrucks untergebracht. Eine Stromversorgung des Motors erfolgt über einen am Gehäuse 13 angeordneten elektrischen Anschluss und ein Stromkabel 30. Ein Transport des Reinigungsgeräts 10 erfolgt bspw. über einen an der Oberseite des Gehäuses 13 angeordneten Griff 12.

An einer Außenseite des Gehäuses 13 weist das Reinigungsgerät 10 einen Kabelhaken 40 auf. Der Kabelhaken 40 befindet sich vorzugsweise an einer Rückseite des Reinigungsgeräts 10. Das Kabel 30 ist in der Darstellung der Fig. 1 in einem verstauten, d.h. aufgewickelten und an den Kabelhaken 40 gehängten, Zustand gezeigt. Je nach Größe des Reinigungsgeräts 10 und Länge des Kabels 30 ist der Kabelhaken 40 so geräumig ausgebildet, dass er eine Vielzahl von Kabelwicklungen aufnehmen und halten kann.

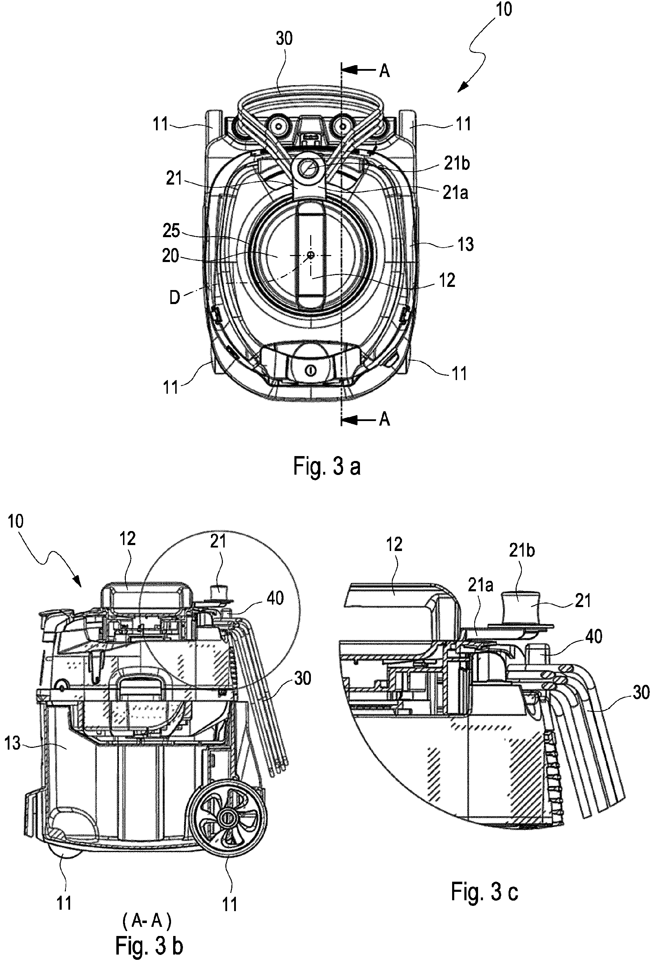

Das Reinigungsgerät 10 weist eine Aufrolleinrichtung auf, die mit dem Bezugszeichen 20 bezeichnet ist. Die manuelle Aufrolleinrichtung 20 umfasst eine Aufrolltrommel (nicht sichtbar) zur Aufnahme des Kabels 30, welche drehbar um eine Drehachse D (s. Fig. 3a) gelagert ist und zur Drehbetätigung ein Bedienelement 21 aufweist. Das Bedienelement 21 ist insbesondere fest mit der drehbeweglichen Aufrolltrommel verbunden. Das Bedienelement 21 ist in der dargestellten Ausführungsform als Handkurbel ausgebildet und setzt sich aus mehreren mehrere Abschnitten zusammen. Bei einer kreisförmigen Bewegung des Bedienelements 21 dreht sich die Aufrolltrommel und das Kabel 30 wird aufgerollt.

In Fig. 1 ist das Bedienelement 21 in einer Verriegelungsstellung gezeigt, in der das Bedienelement 21 in Richtung des Kabelhakens 40 ausgerichtet ist. In der Verriegelungsstellung bildet das Bedienelement 21 einen Verschluss für den Kabelhaken 40, da ein Abstand zwischen dem Kabelhaken und dem Bedienelement 21 kleiner ist als ein Durchmesser des Kabels 30. Somit ist das Kabel 30 in der Verriegelungsstellung des Bedienhebels sicher verstaut und kann nicht von dem "verschlossenen" Kabelhaken 40 abrutschen.

In der Verriegelungsstellung kann das Bedienelement 21 zusätzlich arretierbar ausgebildet sein. Eine zusätzliche Arretierung verhindert ein ungewolltes Verschwenken des Bedienhebels 21 aus der Verriegelungsposition, bspw. beim Transport des mobilen Reinigungsgeräts 10. Als Arretierungsmittel kommt bspw. ein Feststellelement wie ein Stift, eine Schraube o.dgl. in Betracht kommen oder ein zusätzliches Arretierungselement, das klammernd um den Bedienhebel und den Kabelhaken greift.

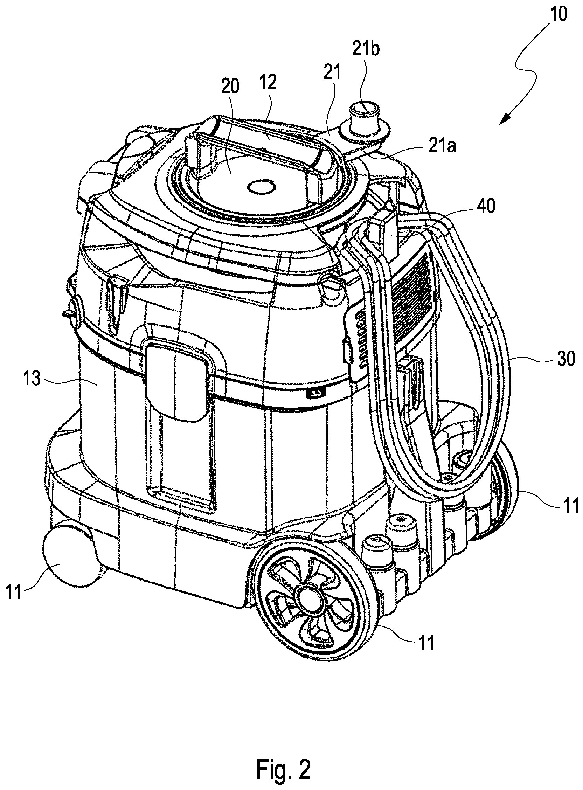

In Fig. 2 ist das Bedienelement 21 in einer Freigabestellung gezeigt. Im Vergleich zur Verriegelungsstellung ist das Bedienelement 21 exemplarisch um ca. 45° entlang einer Kreisbahn 25 um die Drehachse D zur Seite verschwenkt. Das Bedienelement 21 befindet sich jedoch stets in einer Freigabestellung, solange es sich nicht in der Verriegelungsstellung befindet. In der Freigabestellung ist der Kabelhaken 40 frei zugänglich und ein (aufgewickeltes) Kabel 30 kann an den Kabelhaken 40 einfach und schnell an- und/oder abgehängt werden. Eine Überführung des Bedienelements 21 zwischen der Verriegelungsstellung und der Freigabestellung erfolgt über eine Schwenkbewegung. Bei der Schwenkbewegung handelt es sich vorzugsweise um eine Schwenkbewegung entlang einer Kreisbahn 25 (siehe Fig. 3).

In Fig. 3 sind mehrere Ansichten des Reinigungsgeräts 10 mit "verschlossenem" Kabelhaken 40 aus unterschiedlichen Perspektiven gezeigt. Das Bedienelement 21 weist einen sich im Wesentlichen in einer radialen Richtung erstreckenden ersten Abschnitt 21a auf (vgl. insb. Fig. 3c). Die Richtungsangabe radial bezieht sich auf die kreisförmige Bewegung des Bedienhebels 21 entlang der Kreisbahn 25 (siehe z.B. Fig. 3a). Das Bedienelement 21 weist außerdem einen zweiten Abschnitt 21b auf, welcher drehbar auf dem ersten Abschnitt angeordnet ist. Der zweite Abschnitt 21b dient als Griffelement und ist so ausgebildet, dass er bei einer Verschwenkbewegung entlang der Kreisbahn 25, beispielsweise beim manuellen Aufrollen des Kabels 30 über die Aufrolltrommel der Aufrolleinrichtung 20, nicht mitdreht.

In der Draufsicht gemäß Fig. 3a ist zu erkennen, dass das Bedienelement 21 den Kabelhaken 40 in Aufstellrichtung des Reinigungsgeräts 10 betrachtet vollständig überdeckt. Dies ist jedoch nicht zwingend, es ist vielmehr ausreichend, wenn ein Abstand zwischen dem Bedienelement 21 und dem Kabelhaken 40 in vertikaler bzw. horizontaler Richtung eine Größenordnung des Kabeldurchmessers zumindest nicht überschreitet. Ein direkter Kontakt zwischen dem Bedienhebel 21 und dem Kabelhaken 40 in der Verriegelungsstellung ist unerwünscht, da dies den Betrieb der Aufrolleinrichtung 20 behindern würde. Wie in der Seitenansicht gemäß Fig. 3b zu erkennen, ist der Bedienhebel 21 in Aufstellrichtung des Reinigungsgeräts 10 betrachtet vollständig oberhalb des Kabelhakens 40 angeordnet. Dies ist ebenfalls nicht zwingend, solange der radiale erste Abschnitt 21a des Bedienelements 21 nicht derart lang ausgebildet ist, dass er an den Kabelhaken 40 anstößt.

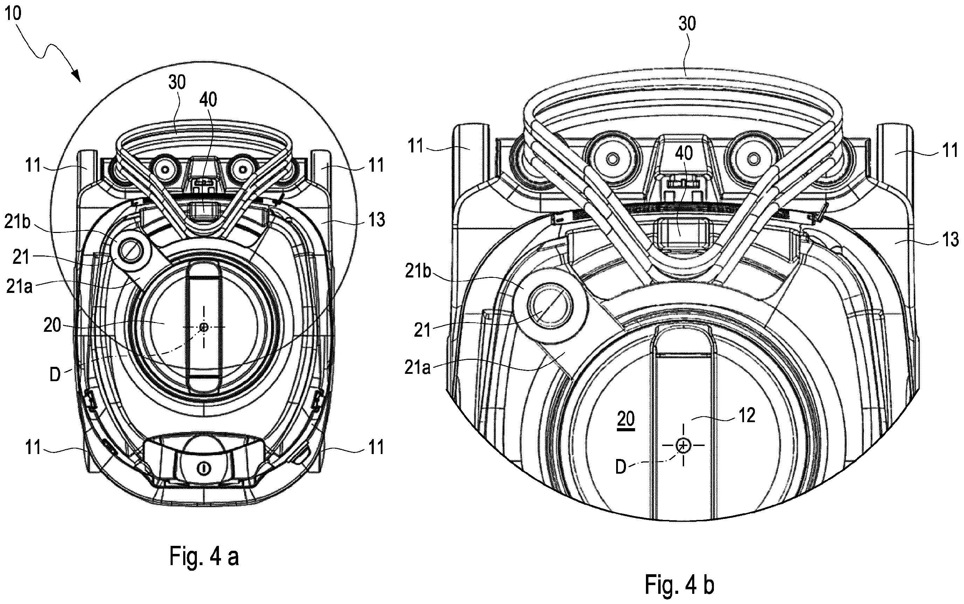

In Fig. 4 ist das Reinigungsgerät 10 mit dem Bedienelement 21 in Freigabestellung gezeigt. Über die Aufrolleinrichtung 20 wird bei einer Verschwenkung des Bedienhebels 21 entlang der Kreisbahn 25 das Kabel 30 aufgerollt. Der Bedienhebel 21 wird um den Griff 12 bewegt und bei einem Abrollen des Kabels 30 schwenkt der Bedienhebel 21 dementsprechend in eine entgegengesetzte Richtung zurück.

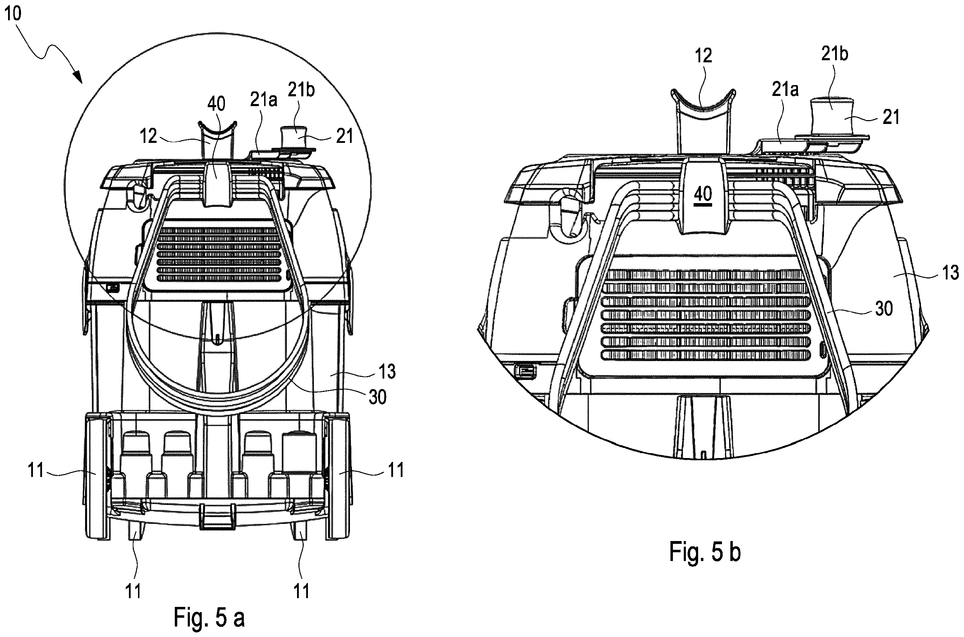

Gemäß Fig. 5 ist der Kabelhaken 40 feststehend an einer Rückseite des Gehäuses 13 ausgebildet und erstreckt sich ausschließlich in einer im Wesentlichen vertikalen Richtung. Der Kabelhaken 40 schließt in etwa bündig ab mit einer Oberseite des Gehäuses 13 ab und ist derart geräumt ausgebildet, dass er eine Vielzahl von Kabelwicklungen aufnimmt. Das am Kabelhaken 40 aufgehängte Kabel 30 verdeckt an der Rückseite des Reinigungsgeräts angeordnete Lüftungsschlitze nicht.

### Bezugszeichenliste:

- 10: Kabelgebundenes Reinigungsgerät
- 11: Rollen
- 12: Griff
- 13: Gehäuse
- 20: Aufrolleinrichtung
- 21: Bedienelement
- 21a: erster Abschnitt des Bedienelements
- 21b: zweiter Abschnitt des Bedienelements
- 25: Kreisbahn
- 30: Kabel
- 40: Kabelhaken
- D: Drehachse

## Patentansprüche

1. Kabelgebundenes Reinigungsgerät (10), insbesondere Sauggerät, mit einer über ein Bedienelement (21) betätigbaren Aufrolleinrichtung (20) für ein Kabel (30) und einem an einer Außenseite des Reinigungsgeräts (10) angeordneten Kabelhaken (40), **dadurch gekennzeichnet dass** das Bedienelement (21) in einer Verriegelungsstellung einen Verschluss für den Kabelhaken (40) bildet.

2. Kabelgebundenes Reinigungsgerät (10) nach Anspruch 1, dessen Bedienelement (21) zwischen der Verriegelungsstellung und einer Freigabestellung überführbar ist, wobei in der Freigabestellung der Kabelhaken (40) frei zugänglich ist.

3. Kabelgebundenes Reinigungsgerät (10) nach Anspruch 2, dessen Bedienelement (21) zwischen der Verriegelungsstellung und der Freigabestellung eine Schwenkbewegung, vorzugsweise eine Schwenkbewegung entlang einer Kreisbahn (25), ausführt.

4. Kabelgebundenes Reinigungsgerät (10) nach einem der voranstehenden Ansprüche, dessen Aufrolleinrichtung (20) eine drehbar um eine Drehachse (D) gelagerte Aufrolltrommel zur Aufnahme des Kabels (30) aufweist, wobei das Bedienelement (21) fest mit der Aufrolltrommel verbunden ist.

5. Kabelgebundenes Reinigungsgerät (10) nach einem der voranstehenden Ansprüche, dessen Aufrolleinrichtung (20) bei einer Bewegung des Bedienelements (21) entlang der Kreisbahn (25) das Kabel (30) aufrollt.

6. Kabelgebundenes Reinigungsgerät (10) nach einem der voranstehenden Ansprüche, dessen Bedienelement (21) einen sich im Wesentlichen in einer radialen Richtung erstreckenden ersten Abschnitt (21a) aufweist.

7. Kabelgebundenes Reinigungsgerät (10) nach Anspruch 6, dessen Bedienelement (21) einen drehbar auf dem ersten Abschnitt (21) angeordneten zweiten Abschnitt (21b) aufweist, wobei vorzugsweise der zweite Abschnitt als Griffelement dient.

8. Kabelgebundenes Reinigungsgerät (10) nach einem der voranstehenden Ansprüche, dessen Bedienelement (21) als Handkurbel ausgebildet ist.

9. Kabelgebundenes Reinigungsgerät (10) nach einem der voranstehenden Ansprüche, mit einem feststehenden Kabelhaken (40).

10. Kabelgebundenes Reinigungsgerät (10) nach einem der voranstehenden Ansprüche, dessen Kabelhaken (40) sich im Wesentlichen in vertikaler Richtung erstreckt.

11. Kabelgebundenes Reinigungsgerät (10) nach einem der voranstehenden Ansprüche, dessen Bedienelement (21) in der Verriegelungsstellung den Kabelhaken (40) mindestens teilweise, vorzugsweise vollständig, überdeckt.

12. Kabelgebundenes Reinigungsgerät (10) nach einem der voranstehenden Ansprüche, dessen Bedienelement (21) in der Verriegelungsstellung einen Abstand zu dem Kabelhaken (40) aufweist, wobei der Abstand vorzugsweise geringer ist als ein Durchmesser des Kabels (30).

13. Kabelgebundenes Reinigungsgerät (10) nach einem der voranstehenden Ansprüche, dessen Bedienelement (21) in der Verriegelungsstellung arretierbar ist.

## Claims

1. Cabled cleaning device (10), in particular vacuum cleaner, with a roll-up apparatus (20) which can be activated via an operating element (21) for a cable (30) and a cable hook (40) arranged on an outer side of the cleaning device (10), **characterized in that** the operating element (21), in a locking position, forms a closure for the cable hook (40).

2. Cabled cleaning device (10) according to Claim 1, the operating element (21) of which can be transferred between the locking position and a release position, wherein the cable hook (40) is freely accessible in the release position.

3. Cabled cleaning device (10) according to Claim 2, the operating element (21) of which performs a pivoting movement, preferably a pivoting movement along a circular path (25), between the locking position and the release position.

4. Cabled cleaning device (10) according to any one of the preceding claims, the roll-up apparatus (20) of which has a roll-up drum mounted rotatably about an axis of rotation (D) for receiving the cable (30), wherein the operating element (21) is connected fixedly to the roll-up drum.

5. Cabled cleaning device (10) according to any one of the preceding claims, the roll-up apparatus (20) of which rolls up the cable (30) in the event of a movement of the operating element (21) along the circular path (25).

6. Cabled cleaning device (10) according to any one of the preceding claims, the operating element (21) of which has a first portion (21a) which extends substantially in a radial direction.

7. Cabled cleaning device (10) according to Claim 6, the operating element (21) of which has a second portion (21b) arranged rotatably on the first portion (21), wherein the second portion preferably serves as a grip element.

8. Cabled cleaning device (10) according to any one of the preceding claims, the operating element (21) of which is formed as a hand crank.

9. Cabled cleaning device (10) according to any one of the preceding claims, with a stationary cable hook (40) .

10. Cabled cleaning device (10) according to any one of the preceding claims, the cable hook (40) of which extends substantially in the vertical direction.

11. Cabled cleaning device (10) according to any one of the preceding claims, the operating element (21) of which, in the locking position, covers the cable hook (40) at least partially, preferably completely.

12. Cabled cleaning device (10) according to any one of the preceding claims, the operating element (21) of which, in the locking position, has a distance to the cable hook (40), wherein the distance is preferably smaller than a diameter of the cable (30).

13. Cabled cleaning device (10) according to any one of the preceding claims, the operating element (21) of which can be fixed in the locking position.

## Revendications

1. Appareil de nettoyage filaire (10), notamment appareil d'aspiration, comprenant un dispositif d'enroulement (20) pour un câble (30), pouvant être actionné par un élément de commande (21), et un crochet de câble (40) agencé sur un côté extérieur de l'appareil de nettoyage (10), **caractérisé en ce que** l'élément de commande (21) forme, dans une position de verrouillage, une fermeture pour le crochet de câble (40) .

2. Appareil de nettoyage filaire (10) selon la revendication 1, dont l'élément de commande (21) peut être transféré entre la position de verrouillage et une position de libération, le crochet de câble (40) étant librement accessible dans la position de libération.

3. Appareil de nettoyage filaire (10) selon la revendication 2, dont l'élément de commande (21) exécute un mouvement de pivotement, de préférence un mouvement de pivotement le long d'une trajectoire circulaire (25), entre la position de verrouillage et la position de libération.

4. Appareil de nettoyage filaire (10) selon l'une quelconque des revendications précédentes, dont le dispositif d'enroulement (20) présente un tambour d'enroulement monté de manière rotative autour d'un axe de rotation (D) pour recevoir le câble (30), l'élément de commande (21) étant relié de manière fixe au tambour d'enroulement.

5. Appareil de nettoyage filaire (10) selon l'une quelconque des revendications précédentes, dont le dispositif d'enroulement (20) enroule le câble (30) lors d'un mouvement de l'élément de commande (21) le long de la trajectoire circulaire (25).

6. Appareil de nettoyage filaire (10) selon l'une quelconque des revendications précédentes, dont l'élément de commande (21) présente une première section (21a) s'étendant essentiellement dans une direction radiale.

7. Appareil de nettoyage filaire (10) selon la revendication 6, dont l'élément de commande (21) présente une deuxième section (21b) agencée de manière rotative sur la première section (21), la deuxième section servant de préférence d'élément de préhension.

8. Appareil de nettoyage filaire (10) selon l'une quelconque des revendications précédentes, dont l'élément de commande (21) est configuré sous forme de manivelle.

9. Appareil de nettoyage filaire (10) selon l'une quelconque des revendications précédentes, comprenant un crochet de câble fixe (40).

10. Appareil de nettoyage filaire (10) selon l'une quelconque des revendications précédentes, dont le crochet de câble (40) s'étend essentiellement dans la direction verticale.

11. Appareil de nettoyage filaire (10) selon l'une quelconque des revendications précédentes, dont l'élément de commande (21), dans la position de verrouillage, recouvre au moins partiellement, de préférence entièrement, le crochet de câble (40).

12. Appareil de nettoyage filaire (10) selon l'une quelconque des revendications précédentes, dont l'élément de commande (21) présente, dans la position de verrouillage, une distance par rapport au crochet de câble (40), la distance étant de préférence inférieure à un diamètre du câble (30).

13. Appareil de nettoyage filaire (10) selon l'une quelconque des revendications précédentes, dont l'élément de commande (21) peut être bloqué dans la position de verrouillage.
